# EUROPÄISCHE PATENTANMELDUNG

(11) **EP 2 166 676 A2**
(43) Veröffentlichungstag der Anmeldung: **24.03.2010**
(21) Anmeldenummer: 09011248.3
(22) Anmeldetag: 02.09.2009
(51) Int. Cl.: H04B 7/04

(54) **Diversity-Empfangssystem**

(30) Priorität: 18.09.2008 DE 102008047978
(71) Anmelder: Delphi Delco Electronics Europe GmbH, 42119 Wuppertal (DE)
(72) Erfinder: Heuer, Christian, 31195 Lamspringe (DE)

(57) **Zusammenfassung**

Ein für den mobilen Empfang beispielsweise von Rundfunksignalen in Fahrzeugen bestimmtes Empfangsystem besteht aus n an dem Fahrzeug angeordneten Antennen (2, 3, 4, ... n), deren Antennenleitungen an einem Summierungspunkt (8) zusammengefasst sind, wobei die über die Antennen eingekoppelten Signale über in den Antennenleitungen befindliche Netzwerke (5, 6, 7, ... sₙ) nach Maßgabe einer jeweils fest vorgegebenen Phasenlage (Φ₁, Φ₂, Φ₃,..., Φₙ) an dem Summierungspunkt (8) zusammengefasst werden. Zur Bildung und Auswahl von Gruppen der zusammenzufassenden Signale unter Anpassung an die jeweils herrschenden Empfangsbedingungen befinden sich Schalter (9, 10, 11, ... sₙ) im Verlauf der Antennenleitungen, welche mit einem Diversity-Modul (16) in Wirkverbindung stehen.

## Beschreibung

Die Erfindung bezieht sich auf ein Empfangssystem entsprechend dem Oberbegriff des Anspruchs 1.

Es ist bekannt, und zwar insbesondere für den mobilen Empfang von Signalen des Rundfunks, jedoch auch anderer Funkdienste, an einem Fahrzeug mehrere voneinander getrennte Antennen anzubringen, um Störungen u. a. aufgrund von Interferenzeffekten wenigstens zu mindern. Diese entstehen aufgrund von Reflexionen von Funkwellen an Gebäuden, Bergen oder sonstigen bodenseitigen Strukturen, so dass es an einem Empfangsort zu einer Überlagerung der direkten Funkwelle mit einer oder auch mehreren reflektierten Funkwellen kommen kann, deren Amplituden und - bedingt durch unterschiedliche Ausbreitungswege - auch Phasenlagen sich unterscheiden. Ein solcher Mehrwegeempfang kann nach Maßgabe der Phasendifferenzen im äußersten Fall zu einer Auslöschung, zumindest zu einer Schwächung des Nutzsignals führen. Weitere, einen gleichförmigen Empfang beeinträchtigende Komplikationen entstehen fahrtbedingt durch ständig wechselnde Orientierungen des Fahrzeugs relativ zu einem Sender und hiermit zusammenhängenden wechselnden Empfangs- bzw. Abschattungsbedingungen.

Dadurch, dass mehrere räumlich voneinander getrennte Antennen benutzt werden, die sämtlich unterschiedlichen Empfangsbedingungen unterliegen, ergibt sich die Möglichkeit, jeweils die Antenne aus der Gruppe der vorhandenen Antennen auszuwählen und mit einem Empfänger zu verbinden, deren Signal die aktuell beste Empfangsqualität oder auch den größten Signal / Stör-Abstand aufweist. Bei diesem, auch Scanning Diversity genannten Empfangsprinzip wird im Fall auftretender Störungen des Empfangssignals der aktuell benutzten Antenne ein Umschalten auf eine andere Antenne ausgelöst. Anstelle einer Umschaltung auf eine einzelne andere Antenne kann auch ein Umschalten auf mehrere Antennen ausgelöst werden, deren Summensignal dem Empfänger zugeleitet wird. Ein solches Diversity-System ist derzeit bereits verfügbar und wird mit einem speziellen IC realisiert.

Eine bloße Addition der Signale mehrerer Antennen führt noch nicht in allen Fällen zu einer verbesserten Empfangsqualität, weil ihre Phasenlagen sich im allgemeinen unterscheiden.

Ein bei der Summierung die Phasenlage der Signale berücksichtigendes Diversity-System in der Form eines Phasen-Diversity ist beispielsweise in der EP 1 763 151 A2 beschrieben, bei welchem mehrere Antennen eingangsseitig an ein Diversity-Modul angeschlossen sind, das ausgangsseitig über eine HF-Leitung mit einem Empfänger in Verbindung steht, wobei über die HF-Leitung ein Summensignal, bestehend aus zwei jeweils ausgewählten Antennensignalen, deren eines eine Phasendreheinrichtung durchlaufen hat, geführt wird. Das Diversity-Modul ist durch zwei in einem Summierglied zusammengeführte Signalpfade gekennzeichnet, deren einer die genannte Phasendreheinrichtung enthält und die jeder über einen durch eine Steuereinrichtung adressierbaren Signalwahlschalter eingangsseitig mit den Antennen in Verbindung stehen. Der Signalwahlschalter ist in Abhängigkeit von der Qualität des genannten Summensignals, insbesondere beim Auftreten von Störungen, zur Herstellung einer Verbindung zwischen den beiden Signalpfaden und zwei aus der Gruppe der eingangsseitigen Antennen ausgewählten Antennen eingerichtet, wobei nach Maßgabe einer in der Steuereinrichtung abgelegten Phasenwertematrix die den einzelnen Stellungen der Signalwahlschalter fest zugeordneten diskreten Phasendrehwinkel eingestellt werden. Die diskreten Werte der Phasendrehwinkel sind auf der Grundlage der Strahlungsdiagramme der am Fahrzeug montierten Antennen mit Hinblick auf die Erzielung einer maximalen Diversity-Effizienz und einer möglichst kleinen Anzahl diskreter Werte der Phasenwinkel gewählt, wobei unter Diversity-Effizienz ein die Leistungsfähigkeit der Antennenanlage nach Maßgabe der fiktiv verfügbaren Empfangssignale beschreibender Wert zu verstehen ist. Es wird somit im Summierungspunkt keine absolut gleichphasige Einstellung der zu summierenden Signale, sondern eine solche Zusammenfassung angestrebt, welche einen maximalen Signal / Stör-Abstand liefert.

Aus der EP 1 126 631 B1 ist ein weiteres Diversity-System nach Art eines Phasen-Diversity bekannt, welches sich von dem vorstehend beschriebenen im wesentlichen dadurch unterscheidet, dass an einem Summierungspunkt, an dem die Signalpfade zusammengeführt werden, im Verlauf des einen Pfades eine solche Phasendreheinrichtung angeordnet ist, durch welche die zu summierenden Signale phasenoptimiert zu denen im anderen Pfad ausgerichtet werden. Das so gebildete Summensignal wird anschließend einer Demodulation zugeführt. Die Vorgänge der Summierung der Signale der beiden Pfade sowie der Phasendrehung im Bereich des einen Pfades sind in eine Empfangseinrichtung verlagert, und es ist eine Mehrantennenanlage, die räumlich getrennt von der Empfangseinrichtung angeordnet ist, mit adressierbaren Auswahischaltern versehen, über welche beliebige Verbindungen zwischen den beiden Signalpfaden sowie einer jeden der mehreren Antennen herstellbar sind. Mittels eines das Summensignal prüfenden Störungsdetektors erfolgt bei Auftreten einer Störung anhand einer in einer logischen Schalteinrichtung der Mehrantennenanlage matrixartig abgelegten Liste möglicher Schaltstellungen der Auswahlschalter ein Weiterschalten in eine andere Konstellation dieser Schalter, und zwar unter Regelung der Phasendreheinrichtung nach Maßgabe eines maximalen Signal / Stör-Abstandes des Summensignales.

Diese bekannten Phasen-Diversity-Systeme, bei denen die unter den gegenwärtigen Empfangsbedingungen jeweils optimalen Kombinationen der Antennensignale sowie der einzustellenden Phasenwinkel durch Berechnung bzw. Simulation ermittelt werden, sind zwar durch eine verbesserte Empfangsqualität gekennzeichnet, und zwar insbesondere unter den ständig wechselnden Bedingungen eines mobilen Empfangs. Diese Systeme gelten jedoch als verhältnismäßig aufwändig, und zwar aufgrund der erforderlichen variablen Phasenschieber.

Die Aufgabe der Erfindung wird vor diesem Hintergrund darin gesehen, ein gattungsgemäßes, insbesondere für den mobilen Empfang in Fahrzeugen geeignetes kostengünstiges Empfangssystem zu entwerfen, welches bei Wahrung einer guten Empfangsqualität den Aufwand in Gestalt variabler Phasenschieber vermeidet oder zumindest minimiert.

Gelöst ist diese Aufgabe bei einem solchen Empfangssystem durch die Merkmale des Kennzeichnungsteils des Anspruchs 1.

Erfindungswesentlich ist hiernach, dass in Abkehr von dem eingangs dargelegten Stand der Technik in einem Summierungspunkt eine feste Phasenlage der hier zusammenzufassenden, über die einzelnen Antennen der Mehrantennenanordnung eingekoppelten Signale eingerichtet ist. Diese festen Phasenwerte sind mit der Maßgabe angelegt, dass das so gebildete Summensignal statistisch, im Zeitablauf gesehen, durch einen maximalen Signal / Stör-Abstand bzw. eine maximale Diversity-Effizienz gekennzeichnet ist. Somit entfällt die Notwendigkeit eines variablen Phasenschiebers, so dass sich ein im Vergleich zu dem vorstehend dargelegten Stand der Technik einfacherer, insbesondere kostengünstigerer Aufbau des Empfangsystems ergibt.

Die Merkmale der Ansprüche 2 bis 5 sind auf Maßnahmen gerichtet, die einzeln oder auch im Kombination zur Darstellung einer bestimmten Phasenlage der Signale am Summierungspunkt benutzt werden können. Es handelt sich im weitesten Sinne um Einflußgrößen, die durch die Struktur und die Einbaulage der Antenne, die Antennenleitung sowie ein zwischen der Antenne und dem Summierungspunkt befindliches Netzwerk bestimmt werden und von denen die Phasenlage der Signale am Summierungspunkt abhängt.

Gemäß den Merkmalen des Anspruchs 6 sind, ausgehend von den insgesamt n Antennen, jeweils Gruppen, bestehend aus x Antennen gebildet, mit 2 ≤ x < n, deren Signale am Summierungspunkt nach Maßgabe einer festen Phasenlage zusammengefasst werden. Das Summensignal einer einzelnen Gruppe wird einem Empfänger zugeleitet und ist qualitativ durch eine optimierte Diversity-Effizienz bzw. einen optimierten Signal / Stör-Abstand gekennzeichnet. Alternativ ist gemäß den Merkmalen des Anspruchs 7 vorgesehen, die Signale sämtlicher n Antennen nach Maßgabe fest eingestellter Phasenlagen am Summierungspunkt zusammenzufassen und das so gebildete Summensignal einem Empfänger zuzuführen.

Die Merkmale der Ansprüche 8 und 9 sind auf die weitere Ausgestaltung des Empfangssystems im Sinne einer Darstellung von Diversity-Funktionen gerichtet. Zu diesem Zweck ist ein Diversity-Modul vorgesehen, das in an sich bekannter Weise zur Steuerung von Schaltern bestimmt ist, welche den Antennenleitungen zugeordnet sind und den Signalfluss zu den Antennen und dem Summierungspunkt steuern. Auf diese Weise ist die Möglichkeit eröffnet, aus der Gesamtheit der verfügbaren Antennen Gruppen zu bilden, deren Signale am Summierungspunkt nach Maßgabe einer festen Phasenlage zusammengefasst werden, wobei in Abhängigkeit von der aktuellen Empfangsqualität mittels des Diversity-Moduls ein Umschalten auf eine andere Gruppe der Antennen auslösbar ist.

Die Merkmale des Anspruchs 10 sind auf eine weitere Ausgestaltung des Empfangssystems gerichtet. Von Vorteil für die Verwendung bei Fahrzeugen ist der Umstand, dass lediglich eine HF-Leitung benötigt wird, über welche eine Verbindung zu einem Empfänger hergestellt wird.

Die Erfindung wird im Folgenden unter Bezugnahme auf die beiliegende Zeichnungsfigur 1 näher erläutert werden.

Diese zeigt eine Anordnung 1 von n Antennen, von denen die Antennen 2, 3, 4, ..., n gezeigt sind, die in einem Fahrzeug eingebaut sind.

Eine jede der n Antennenzuleitungen ist mit einem Netzwerk 5, 6, 7, ..., ϕₙ versehen, durch welches in einem Summierungspunkt 8 eine vorbestimmte feste Phasenlage Φ₁, Φ₂, Φ₃, ..., Φₙ des über die jeweilige Antennenleitung geführten Signales eingestellt ist. Anstelle eines Netzwerkes 5, 6, 7, ..., ϕₙ können auch, oder dessen Wirkung ergänzend, die Antennenleitungen als solche, oder die Strukturen und Lagen der Antennen oder sämtliche, die Phasenlage des Signales am Summierungspunkt 8 beeinflussende Parameter mit der Maßgabe ausgelegt sein, dass sich am Summierungspunkt 8 die gewünschte feste Phasenlage ergibt, bei welcher das Summensignal statistisch im Zeitablauf durch einen optimalen Signal / Stör-Abstand bzw. eine optimale Diversity-Effizienz gekennzeichnet ist.

Mit 9, 10, 11, ..., sₙ sind Schalter bezeichnet, bei denen es sich beispielsweise um digital individuell adressierbare Bauelemente handeln kann. Einer jeden Antennenleitung ist ein solcher Schalter zugeordnet, so dass insgesamt n Schalter vorhanden sind.

An dem Summierungspunkt 8 ist eine, das optimierte Empfangssignal führende HF-Leitung 13 angeschlossen, die mit einem Verstärker 14 in Verbindung steht. Mit 16 ist ein Diversity-Modul bezeichnet, der über einen, ein ZF-Signal führenden Leitungszweig 17 mit dem Empfänger 15 in Verbindung steht und zur Steuerung der Schalter 9, 10, 11, ..., sₙ eingerichtet ist.

Erfindungsgemäß ist durch Ansteuerung der Schalter 9, 10, 11, ..., sₙ jeweils eine aus x Antennen gebildete Gruppe der insgesamt n Antennen mit 2 ≤ x < n über den Summierungspunkt 8 nach Maßgabe der fest eingestellten Phasenlagen der jeweiligen Signale zusammengefasst, und es wird ein so gebildetes Summensignal dem Empfänger 15 zugeführt. Über das Diversity-Modul 16 wird die Qualität des Summensignals überwacht und ein Weiterschalten auf eine andere Gruppe von x Antennen eingeleitet, sobald die Qualität des gerade empfangenen Summensignals einen definierten Standard unterschreitet.

Die Prüfung sowie Bewertung des Summensignals einer Gruppe von Antennen und ein Weiterschalten auf eine andere Gruppe von Antennen durch entsprechende Ansteuerung der Schalter 9, 10, 11, ..., sₙ kann in an sich bekannter Weise erfolgen, so dass sich ein näheres Eingehen hierauf erübrigt.

Das erfindungsgemäße Empfangssystem eröffnet die Möglichkeit einer einfachen Überlagerung von Antennensignalen ohne die Notwendigkeit der schaltungstechnischen Darstellung variabler Phasenschieber. Das gezeigte Empfangssystem, bestehend aus der Antennenanordnung 1 einschließlich des sich an diese anschließenden Netzwerks bis zu dem Summierungspunkt 8, kann bauvolumensparend angelegt sein, wobei nur eine HF-Leitung 13 für den Empfänger 15 benötigt wird.

**Bezugszeichenliste:**

| | |
|---|---|
| 1. Anordnung | 12. |
| 2. Antenne | 13. Leitung |
| 3. Antenne | 14. Verstärker |
| 4. Antenne | 15. Empfänger |
| 5. Netzwerk | 16. Diversity-Modul |
| 6. Netzwerk | 17. Leitungszweig |
| 7. Netzwerk | |
| 8. Summierungspunkt | Φ₁ Phasenlage |
| 9. Schalter | Φ₂ Phasenlage |
| 10. Schalter | Φ₃ Phasenlage |
| 11. Schalter | |

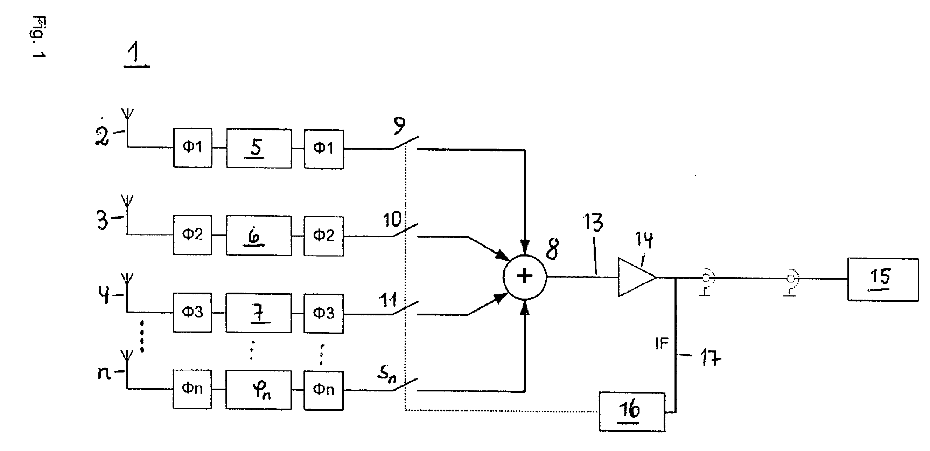

## Patentansprüche

1. Empfangssystem für den mobilen Empfang in Fahrzeugen mit einer An-ordnung (1), bestehend aus n (n-1) einzelnen Antennen (2, 3, 4, ..., n), deren Antennenleitungen an einem Summierungspunkt (8) zusammengefasst sind, **dadurch gekennzeichnet, dass** die Phasenlage der Signale der n Antennenleitungen am Summierungspunkt (8) mit der Maßgabe fest eingestellt ist, dass hier eine lineare Überlagerung der Signale zwecks Bildung eines statistisch im Zeitablauf hinsichtlich eines Signal / Stör-Abstandes optimierten Summensignales darstellbar ist.

2. Empfangssystem nach Anspruch 1, **dadurch gekennzeichnet, dass** die fest eingestellte Phasenlage des einzelnen Signals am Summierungspunkt (8) durch eine dementsprechende Anlage der diesem zugeordneten Antennenleitung dargestellt ist.

3. Empfangsystem nach Anspruch 1 oder 2, **dadurch gekennzeichnet, dass** zur Einstellung einer festen Phasenlage des einzelnen Signals am Summierungspunkt (8) ein im Verlauf der jeweiligen Antennenleitung angeordnetes Netzwerk (5, 6, 7, ..., ϕₙ) vorgesehen ist.

4. Empfangssystem nach einem der Ansprüche 1 bis 3, **dadurch gekennzeichnet, dass** die Einstellung einer festen Phasenlage des einzelnen Signales am Summierungspunkt (8) durch die Struktur der zugeordneten Antenne (2, 3, 4, ..., n) dargestellt ist.

5. Empfangssystem nach einem der Ansprüche 1 bis 4, **dadurch gekennzeichnet, dass** die Einstellung einer festen Phasenlage des einzelnen Signales am Summierungspunkt (8) durch die Lage bzw. den Einbauort der zugeordneten Antenne (2, 3, 4, ..., n) dargestellt ist.

6. Empfangssystem nach einem der Ansprüche 1 bis 5, **dadurch gekennzeichnet, dass** ausgehend von den n Antennen (2, 3, 4, ..., n), jeweils Gruppen, bestehend aus x Antennen mit 2 ≤ x < n, gebildet sind, und dass in jeder Gruppe die Phasenlage der einzelnen Signale mit der Maßgabe am Summierungspunkt (8) fest eingestellt ist, dass ein hinsichtlich seines Signal / Stör-Abstandes statistisch im Zeitablauf optimiertes, einer Gruppe zugeordnetes Summensignal darstellbar ist.

7. Empfangssystem nach einem der Ansprüche 1 bis 5, **dadurch gekennzeichnet, dass** die Antennenleitungen der n Antennen mit der Maßgabe einer festen Phasenlage der Signale am Summierungspunkt (8) zusammenfassbar sind, so dass das Summensignal aus der Überlagerung der Signale deren Antennen (2, 3, 4, ... n) dargestellt ist.

8. Empfangssystem nach einem der Ansprüche 1 bis 7, **dadurch gekennzeichnet, dass** in jeder der n Antennenleitungen ein eine Signalübertragung zu dem Summierungspunkt (8) sperrender oder freigebender Schalter (9, 10,11, ..., sₙ) angeordnet ist.

9. Empfangssystem nach Anspruch 8, **gekennzeichnet** in an sich bekannter Weise durch ein zur Prüfung und Bewertung der Empfangsqualität der über die einzelnen Antennen (2, 3, 4, , n) eingekoppelten Signale sowie zur Betätigung der Schalter (9, 10,11, ..., sₙ) in Abhängigkeit von dem Ergebnis der Prüfung bestimmtes und eingerichtetes Diversity-Modul (16).

10. Empfangssystem nach einem der vorangegangenen Ansprüche 1 bis 9, **dadurch gekennzeichnet, dass** der Summierungspunkt (8) über eine zur Führung des optimierten Summensignals bestimmte HF-Leitung (13) mit einem Empfänger (15) in Verbindung steht.
